# EUROPEAN PATENT APPLICATION

(11) **EP 4 265 347 A1**
(43) Date of publication of application: **25.10.2023**
(21) Application number: 21907120.6
(22) Date of filing: 16.12.2021
(51) Int. Cl.: B08B 15/02, B08B 5/02, B26D 1/547

(54) **DIAMOND WIRE SAW DRY-CUTTING METHOD**

(30) Priority: 18.12.2020 KR 20200179106
(71) Applicant: Egun Co., Ltd., Gwangju-si, Gyeonggi-do 12817 (KR)
(72) Inventor: LEE, Sung Jun, Gwangju-si, Gyeonggi-do 12808 (KR); LEE, Chae Mun, Seongnam-si, Gyeonggi-do 13298 (KR)
(74) Representative: Stolmár & Partner Patentanwälte PartG mbB
(86) International application number: PCT/KR2021/019169
(87) International publication number: WO 2022/131816

(57) **Abstract**

A system for collecting, in a dry manner, foreign material created when a reactor structure is cut and foreign material stuck to a cutting wire may comprise: a transparent cover closing the reactor structure, which is to be cut, and having a plurality of cutting groove members provided on the outer peripheral surface thereof and adjusted to be suitable to the height of a cutting wire; an air compressor for supplying compressed air; an air hose for transferring the compressed air; passage members, which are respectively provided in the plurality of cutting groove members to receive the compressed air from the air hose so that the compressed air passes through the transparent cover and is sprayed at the cutting wire; packing members, which encompass at least a portion of the inner peripheral surface of each of the plurality of cutting groove members while encompassing the outer peripheral surface of at least a portion of each passage member, so as to have frictional force with each passage member; and a discharge part, which is provided near the end of the reactor structure, encompassing the reactor structure, in the rotational direction of the cutting wire so as to discharge the foreign material.

## Description

### [Technical Field]

The present invention relates to a diamond wire saw dry-cutting method, and more particularly to a dust collection system for collecting foreign matter generated when a structure is cut using a diamond wire saw dry-cutting method and a wire saw apparatus for cutting a structure using a dry method.

### [Background Art]

In general, a structure constructed using concrete, etc. may be cut by a cutting apparatus using a diamond wire. A cutting wire configured to cut a concrete structure, a rock, etc. may be easily contaminated by various kinds of foreign matter, such as dust, water, and sludge, during cutting. In order to neatly cut the concrete structure, etc., it is necessary to remove foreign matter present on the surface of the wire.

However, there is no apparatus for removing foreign matter attached to the surface of the cutting wire, and it is not easy for a user to manually remove foreign matter from the surface of a long wire. Therefore, there is a necessity for a wire dust collection system/dust collection apparatus for more effectively removing foreign matter, such as dust, attached to the surface of the diamond wire, etc.

A conventional dust collection system uses a dust collection container, a dust collection cover, and a high-output motor for collecting dust in order to collect foreign matter generated from a cutting plane of a structure in the state in which the cutting plane of the structure is hermetically sealed. In addition, when the structure is a structure having great size, such as a nuclear power plant, a high-output, large-sized dust collection facility is customized and used. However, such a large-sized dust collection facility is expensive and takes a long time to manufacture. That is, the large-sized dust collection facility is inefficient.

In addition, the conventional dust collection system focuses only on collection of foreign matter from the structure in the state in which the cutting plane of the structure is hermetically sealed. To this end, the dust collection container is disposed under the cutting plane in order to collect dust. As a result, it is not possible to remove foreign matter attached to the cutting wire. In addition to foreign matter separated from the cutting plane of the structure during cutting, foreign matter attached to the cutting wire causes considerable environmental pollution, and therefore it is also important to completely remove the foreign matter attached to the cutting wire. However, such a type of dust collection system or dust collection cover has not yet been proposed.

### [Disclosure]

### [Technical Problem]

It is an object of the present invention to provide a dust collection system for collecting foreign matter generated when a structure is cut and a wire saw apparatus for cutting a structure using a dry method.

Objects of the present invention are not limited to the aforementioned objects, and other unmentioned objects will be clearly understood by a person having ordinary skill in the art to which the present invention pertains based on the following description.

### [Technical Solution]

A dust collection system for collecting foreign matter generated during cutting of a nuclear power plant structure and foreign matter attached to a cutting wire in a dry state to achieve the object includes a cover configured to hermetically seal the nuclear power plant structure, which is a target to be cut, the cover being provided at an outer circumferential surface thereof with a plurality of cut recess members adjusted for the height of the cutting wire, the cover being made of a transparent material, an air compressor configured to supply compressed air, an air hose configured to convey the compressed air, a passage member provided in each of the plurality of cut recess members, the passage member being configured to receive the compressed air such that the compressed air is sprayed to the cutting wire through the cover made of the transparent material, a packing member configured to wrap at least a part of an inner circumferential surface of each of the plurality of cut recess members while wrapping at least a part of an outer circumferential surface of the passage member such that frictional force is formed between the passage member and the packing member, and a discharge portion provided in the vicinity of an end of the nuclear power plant structure that surrounds the nuclear power plant structure in a rotating direction of the cutting wire, the discharge portion being configured to discharge the foreign matter.

The passage member may be configured such that the length of the passage member is adjustable so as to extend through the cover.

The passage member may include a pipe.

The cover made of the transparent material may include a transparent acrylic cover.

The plurality of cut recess members may be provided along the outer circumferential surface of the cover at predetermined intervals in a direction parallel to a ground, and the vertical height of each of the plurality of cut recess members may be equal to the vertical height of the cutting wire or may be different from the vertical height of the cutting wire within a predetermined range.

The packing member may include a packing member made of rubber.

In an aspect of the present invention, a wire saw apparatus for cutting a structure using a dry method includes a main roller, a first roller unit located at one side of the structure, the first roller being configured to allow a cutting wire introduced from the main roller to pass therethrough such that the cutting wire is directed to the structure so as to surround the structure, and a second roller unit located at the other side of the structure, the second roller being configured to allow the cutting wire moving while surrounding the structure to pass therethrough such that the cutting wire is transferred to the main roller, wherein the first roller unit includes a first fixing roller, a first auxiliary roller configured such that at least a part of the first auxiliary roller is in contact with an outer circumferential surface of the first fixing roller, a first guide roller configured to guide the cutting wire introduced from the main roller to the first fixing roller, and a second auxiliary roller configured such that at least a part of the second auxiliary roller is in contact with an outer circumferential surface of the first guide roller, and the second roller unit includes a second fixing roller configured to allow the cutting wire moving while surrounding the structure to pass therethrough, a third auxiliary roller configured such that at least a part of the third auxiliary roller is in contact with an outer circumferential surface of the second fixing roller, a second guide roller configured to guide the cutting wire introduced from the second fixing roller to the main roller, and a fourth auxiliary roller configured such that at least a part of the fourth auxiliary roller is in contact with an outer circumferential surface of the second guide roller.

The first roller unit may include a first support portion configured to support the first fixing roller and the first auxiliary roller, a first fixing portion coupled to the support portion, the first fixing portion being configured to fix the first roller unit to the structure, a first non-rotary frame located between the first fixing roller and the first guide roller, the first non-rotary frame having a hole, through which the cutting wire passes, formed therethrough, the first non-rotary frame being formed in a cylindrical shape, the first non-rotary frame being non-rotatable, and a first rotary frame inserted into the non-rotary frame, the first rotary frame being formed in a cylindrical shape, the first rotary frame being rotatable.

The second roller unit may include a second support portion configured to support the second fixing roller and the third auxiliary roller, a second fixing portion coupled to the support portion, the second fixing portion being configured to fix the second roller unit to the structure, a second non-rotary frame located between the second fixing roller and the second guide roller, the second non-rotary frame having a hole, through which the cutting wire passes, formed therethrough, the second non-rotary frame being formed in a cylindrical shape, the second non-rotary frame being non-rotatable, and a second rotary frame inserted into the non-rotary frame, the second rotary frame being formed in a cylindrical shape, the second rotary frame being rotatable.

The first rotary frame may be configured to adjust the angle between the first fixing roller and the first guide roller.

The second rotary frame may be configured to adjust the angle between the second fixing roller and the second guide roller.

The wire saw apparatus may further include a cover connected to the ground at one side of the structure, the cover being configured to hermetically seal the first roller unit, the cover being made of a transparent material, and a cover connected to the ground at the other side of the structure, the cover being configured to hermetically seal the second roller unit, the cover being made of a transparent material.

The first roller unit and the second roller unit may be configured to allow the cutting wire to pass therethrough while cutting the structure in a direction parallel to the ground.

The structure may include a nuclear power plant structure.

In another aspect of the present invention, a wire saw apparatus for cutting a structure using a dry method includes a main roller, a first roller unit located at one side of the structure, the first roller being configured to allow a cutting wire introduced from the main roller to pass therethrough such that the cutting wire is directed to the structure so as to surround the structure, and a second roller unit located at the one side of the structure together with the first roller unit so as to be installed at a different height from the first roller unit, the second roller being configured to allow the cutting wire moving while surrounding the structure to pass therethrough such that the cutting wire is transferred to the main roller, wherein the first roller unit includes a first fixing roller, a first auxiliary roller configured such that at least a part of the first auxiliary roller is in contact with an outer circumferential surface of the first fixing roller, a first guide roller configured to guide the cutting wire introduced from the main roller to the first fixing roller, and a second auxiliary roller configured such that at least a part of the second auxiliary roller is in contact with an outer circumferential surface of the first guide roller, and the second roller unit includes a second fixing roller configured to allow the cutting wire moving while surrounding the structure to pass therethrough, a third auxiliary roller configured such that at least a part of the third auxiliary roller is in contact with an outer circumferential surface of the second fixing roller, a second guide roller configured to guide the cutting wire introduced from the second fixing roller to the main roller, and a fourth auxiliary roller configured such that at least a part of the fourth auxiliary roller is in contact with an outer circumferential surface of the second guide roller.

The first roller unit may include a first support portion configured to support the first fixing roller and the first auxiliary roller, a first fixing portion coupled to the support portion, the first fixing portion being configured to fix the first roller unit to the structure, a first non-rotary frame located between the first fixing roller and the first guide roller, the first non-rotary frame having a hole, through which the cutting wire passes, formed therethrough, the first non-rotary frame being formed in a cylindrical shape, the first non-rotary frame being non-rotatable, and a first rotary frame inserted into the non-rotary frame, the first rotary frame being formed in a cylindrical shape, the first rotary frame being rotatable.

The second roller unit may include a second support portion configured to support the second fixing roller and the third auxiliary roller, a second fixing portion coupled to the support portion, the second fixing portion being configured to fix the second roller unit to the structure, a second non-rotary frame located between the second fixing roller and the second guide roller, the second non-rotary frame having a hole, through which the cutting wire passes, formed therethrough, the second non-rotary frame being formed in a cylindrical shape, the second non-rotary frame being non-rotatable, and a second rotary frame inserted into the non-rotary frame, the second rotary frame being formed in a cylindrical shape, the second rotary frame being rotatable.

### [Advantageous Effects]

In a dust collection system according to the present invention, compressed air is sprayed to a cutting wire, whereby it is possible to remove foreign matter attached to the cutting wire as well as foreign matter present on a cutting plane of a structure.

In the dust collection system according to the present invention, compressed air is sprayed using an air injection type dust collection method, and a discharge portion is disposed in the vicinity of the position at which foreign matter is located depending on air pressure and rotating direction of the cutting wire, whereby it is possible to collect and discharge foreign matter without a high-output, large-capacity dust collection facility.

In the dust collection system according to the present invention, compressed air is sprayed to the cutting wire using the air injection type dust collection method, whereby it is also possible to remove heat of the cutting wire generated during cutting. Consequently, it is possible to rapidly restore cutting force of the cutting wire. In addition, it is also possible to increase the lifespan of the cutting wire, and therefore it is possible to reduce expense.

In the dust collection system according to the present invention, dust collection is performed using the air injection type dust collection method, whereby it is possible to further improve a dust collection effect while greatly reducing cost of manufacturing a dust collection facility.

In a wire saw apparatus according to the present invention, an auxiliary roller is provided at each of a fixing roller, a rotary shaft of which is fixed, and a guide roller, to which a rotary shaft is rotatably coupled, of each roller unit, whereby it is possible to prevent separation of the cutting wire, and therefore it is possible to considerably improve cutting efficiency.

Effects obtainable from the present invention are not limited by the above mentioned effects, and other unmentioned effects will be clearly understood by a person having ordinary skill in the art to which the present invention pertains based on the following description.

### [Description of Drawings]

FIG. 1 is a plan view illustrating a dust collection system for collecting foreign matter generated as the result of horizontal cutting of a structure.
FIG. 2 is a view for describing an air compressor 140 used in the air injection type dust collection system according to the present invention.
FIG. 3 is a view showing a cut recess member 115, a packing member 150, and a passage member 120 included in the dust collection system according to the present invention.
FIG. 4 is a view schematically showing an inner structure of the cut recess member 115.
FIG. 5 is a view showing the inner structure of the cut recess member 115 in detail.
FIG. 6 is a view showing a coupling structure of the packing member 150 in detail.
FIG. 7 is a front view illustrating a dust collection system for collecting foreign matter generated as the result of vertical cutting of a structure.
FIG. 8 is a view showing roller units of a wire saw related to the dust collection system according to the present invention in detail.

### [Best Mode]

Hereinafter, preferred embodiments of the present invention will be described in detail with reference to the accompanying drawings. The detailed description disclosed hereinafter together with the accompanying drawings shows exemplary embodiments of the present invention and does not reveal a unique embodiment by which the present invention can be implemented. The following detailed description includes specific details in order to provide complete understanding of the present invention. However, those skilled in the art will appreciate that the present invention can be implemented without such specific details.

The detailed description of the present invention, which will follow, illustrates a specific embodiment by which the present invention can be implemented and refers to the accompanying drawings. These embodiments are described in detail such that those skilled in the art are capable of implementing the present invention. It should be understood that various embodiments of the present invention are different from each other but are not necessarily mutually exclusive. For example, a specific shape, structure, and characteristic of an embodiment described herein may be implemented as another embodiment without departing from the sprit and scope of the present invention. In addition, it should be understood that the position or disposition of individual elements in each disclosed embodiment may be changed without departing from the sprit and scope of the present invention. Consequently, the detailed description, which will follow, is not restrictive, and the scope of the present invention is limited by the appended claims and all equivalents thereto as long as the present invention is appropriately described. In the drawings, similar reference numerals indicate the same or similar functions in several aspects.

In some cases, in order to avoid the concept of the present invention being ambiguous, a well-known structure and apparatus may be omitted, or each structure and apparatus will be shown in the form of a block diagram including core functions thereof. In addition, the same elements are denoted by the same reference numerals throughout this specification.

Hereinafter, embodiments of the present invention will be described in detail with reference to the accompanying drawings such that a person having ordinary skill in the art to which the present invention pertains can easily implement the present invention.

The present invention proposes a dust collection system for efficiently collecting foreign matter, dust, etc. generated when any of various structures, such as a dangerous structure, e.g. a nuclear power plant, a structure having great size, a structure having great length, and a concrete structure, is cut using a wire saw machine.

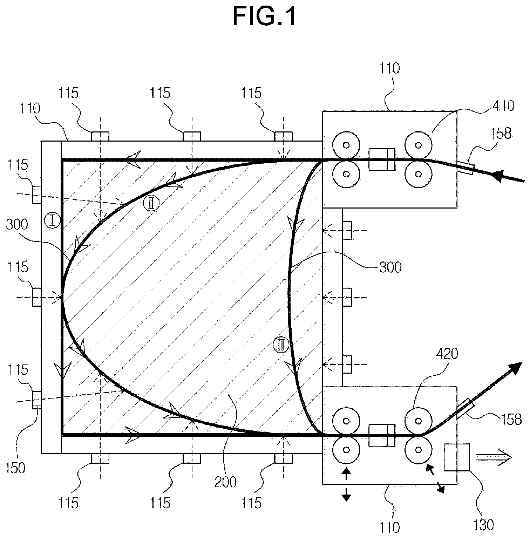

FIG. 1 is a plan view illustrating a dust collection system for collecting foreign matter generated as the result of horizontal cutting of a structure.

Referring to FIG. 1, the dust collection system according to the present invention may include a cover (or a sealing cover) 110, a passage member 120, a discharge portion 130, an air compressor 140 (not shown), and a packing member 150 made of rubber.

FIG. 1, which shows a dust collection system for collecting foreign matter generated from a cutting wire configured to cut a structure, such as concrete, is a plan view illustrating the case in which a structure 200 is cut in a direction parallel to the ground, i.e. a horizontal direction.

In the present invention, a wire configured to cut the structure 200 is called a cutting wire 300. The cutting wire 300 may be a wire saw. As an example, the cutting wire 300 may be a diamond wire saw.

As shown in FIG. 1, the cover 110 of the dust collection system also hermetically seals roller units 410 and 420 of the wire saw configured to drive the cutting wire 300. In the dust collection system, the reason that the cover 110 individually hermetically seals the first roller unit 410 and the second roller unit 420 is that it is necessary to prevent dust or foreign matter separated from the cutting wire as the result of compressed air being sprayed from being dispersed out of the structure 200. That is, dust or foreign matter is discharged only through the discharge portion 130.

In the wire saw machine, the cutting wire 300 may be introduced into the structure 200 through the first roller unit 410, and the cutting wire 300 may be sent to a main roller of the wire saw through the second roller unit 420. In FIG. 1, each of the first roller unit 410 and the second roller unit 420 is fixed to a wall of the structure 200 by an anchor bolt, etc. Since the present invention relates to a dust collection system, the details and constructions of the wire saw will be described below.

The cover 110 hermetically seals the structure 200, which is a target to be cut, and a plurality of cut recess members 115 may be provided at an outer circumferential surface of the cover 110 or an outer surface of the cover 110. The cover 110 may be configured to hermetically seal the remaining part of the structure 200 excluding the plurality of cut recess members 115. In FIG. 1, the structure 200 is illustrated as being formed in a quadrangular shape as an example, and therefore the cover 110 may also be formed in a quadrangular shape so as to hermetically seal an outer surface of the structure 200. Although the material for the cover 110 is not limited, the cover may be made of a metal sheet or a material capable of allowing the structure 200 in the cover 110 to be visible therethrough. For example, a transparent acrylic cover may be used. When the cover 110 is made of the above-specified material, the structure 200 in the cover 110 is visible, whereby it is possible to align the vertical heights of the cutting wire 300, the cut recess members 115, and the passage member 120, and therefore it is possible to more efficiently operate the dust collection system.

Furthermore, as shown in the right side of FIG. 1, the cutting wire 300 passes through the first roller unit 410 via the cover 110 configured to cover the first roller unit 410, passes through the cover 110 configured to cover the second roller unit 420 via the second roller unit 420, and moves to the main roller 405 of the wire saw. At this time, the cover 110 configured to cover the first roller unit 410 is provided in a cover recess thereof with a packing member 158, and the cover 110 configured to cover the second roller unit 420 is provided in a cover recess thereof with a packing member 158. Each of the packing members 158 is configured to prevent introduction of dust into the cover 110 configured to cover a corresponding one of the first roller unit 410 and the cover 110 configured to cover the second roller unit 420 and to protect a corresponding one of the cover recesses. For example, each of the packing members may be made of an elastic urethane resin.

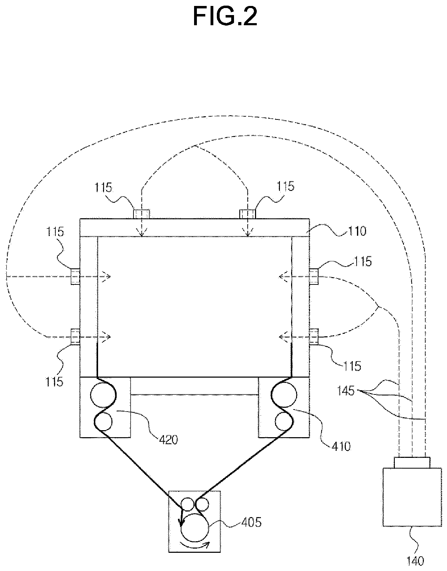

FIG. 2 is a view for describing the air compressor 140 used in the air injection type dust collection system according to the present invention.

The reason that the plurality of cut recess members 115 is provided at the outer surface of the cover 110 is that it is necessary to inject compressed air through the cut recess members 115. The passage member 120 is provided in each of the plurality of cut recess members 115 in a direction toward the cutting wire 300 such that compressed air provided by the compressor 140 is sprayed to the cutting wire 300 through the cover 110. A pipe may be used as an example of the passage member 120. The passage member 120 may be implemented in any of various shapes, such as a circular shape.

The air compressor 140 provides compressed air into the plurality of cut recess members 115. The position at which the air compressor 140 is provided is not particularly restricted. As shown in FIG. 2, however, the air compressor 140 may be provided so as to be supported on the ground and a plurality of air hoses 145 may be connected to the air compressor 140 for worker convenience. Each of the air hoses 145 is inserted into the passage member 120 in a corresponding one of the cut recess members 115. Compressed air generated by the air compressor 140 is supplied to the cut recess members 115 through the plurality of air hoses 145, and is sprayed in a direction toward the cutting wire 300 through the passage member 120 in each of the cut recess members 115.

When the structure 200 is initially cut, the cutting wire 300 surrounds the structure 200 along a line indicated by "I" in FIG. 1. When the cutting wire 300 horizontally cuts the structure 200 while the cutting wire is rotated in a predetermined direction as the result of the wire saw being driven (as an example, horizontal cutting in a counterclockwise direction in FIG. 1), quadrangular corners of the structure 200 are cut first. As the structure 200 is cut by rotation of the cutting wire 300, the cutting wire 330 moves inwardly of the structure 200 and surrounds the structure 200 along a curved line indicated by "II". As the structure 200 is further cut, the cutting wire 330 moves more inwardly of the structure 200 and surrounds the structure 200 along a line indicated by "III". As the structure 200 is cut, as described above, the shape of the cutting wire 300 varies from line I to line II and from line II to line III.

As the structure 200 is cut, as described above, the distance (straight distance) between the cut recess member 115 and the cutting wire 300 increases particularly from opposite corners of the structure 200. If the length of the passage member 120 is fixed even though the distance between the cut recess member 115 and the cutting wire 300 increases, foreign matter attached to the cutting wire 300 may not be easily removed when compressed air is sprayed to the cutting wire 300 through the passage member 120. To this end, the passage member 120 is configured such that the length of the passage member 120 can extend in a direction toward the cutting wire 300 through the cover 110 (or the thickness of the cover 110) and such that the length of the passage member can be adjusted. The passage member 120 located in the vicinity of each of the opposite corners of the structure 200 is configured to further extend in the direction toward the cutting wire 300 as the structure 200 is cut.

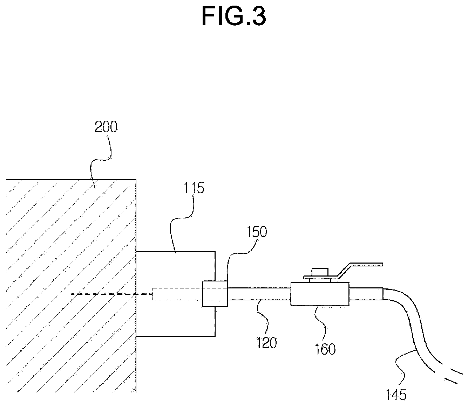

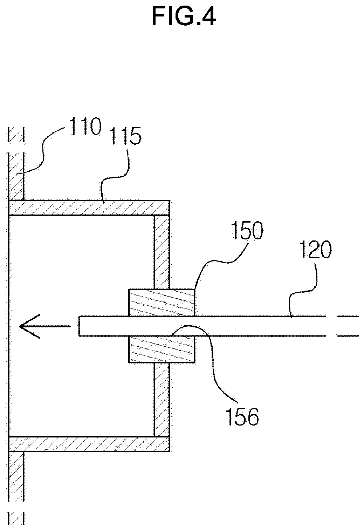

FIG. 3 is a view showing the cut recess member 115, the packing member 150, and the passage member 120 included in the dust collection system according to the present invention, and FIG. 4 is a view schematically showing an inner structure of the cut recess member 115.

Referring to FIG. 3, the packing member 150 (e.g. a packing member made of rubber) is configured to wrap at least a part of an inner circumferential surface (an inner surface) of each of the plurality of cut recess members 115. Hereinafter, a packing member made of rubber will be described as the packing member 150 by way of example for convenience of description.

The packing member 150 is configured to wrap at least a part of an inner circumferential surface of the passage member 120 such that frictional force is formed between the packing member and the passage member 120, whereby it is possible to fix the passage member 120 even when compressed air is injected into the passage member 120. When the cutting wire 300 cuts the structure 200 while being rotated, pressure or vibration may be applied to the cut recess member 115. In this case, when the packing member 150 is made of rubber, the packing member may absorb external force, such as pressure or vibration, applied to the cut recess member 115, whereby it is possible to more robustly support the passage member 120.

The air compressor 140 supplies compressed air to the passage member 120 through the air hose 145. A valve 160 may be provided in the passage member 120 to adjust the amount of compressed air introduced through the air hose 145 or to allow or block the supply of compressed air based on opening and closing thereof.

Referring to FIG. 4, the cover 110, which is made of a metal sheet or a transparent acrylic resin, hermetically seals the structure 200, the cut recess member 115 is provided at the cover 110, and the rubber packing member 150 is provided in the cut recess member 115. As an example, the passage member 120 may be a metal pipe having an outer diameter of 10 mm. A rubber hole 156 is provided in the rubber packing member 150. As an example, the rubber hole 156 may have a diameter of 9 mm. That is, the diameter of the passage member 120 is configured to be greater than the diameter of the rubber hole 156 with a predetermined range. The reason for this is that, when the diameter of the passage member 120 is greater than the diameter of the elastic rubber hole 156 within a predetermined range, frictional force may be maintained between the passage member 120 and the rubber hole 156 in the state in which the passage member is fitted in the rubber hole, whereby robustness may be improved.

As shown in FIG. 1, the cut recess members 115 may be provided along the outer circumferential surface of the cover 110 at predetermined intervals. Since the shape of the structure 200 is quadrangular, it is also necessary for the cover 110 to have four surfaces in order to hermetically seal the structure 200. As shown in FIG. 1, a plurality of cut recess members 115 may be provided for each surface as an example, and the cut recess members 115 may be spaced apart from each other by a predetermined distance. In FIG. 1, the cutting wire 300 cuts the structure 200 while being rotated in the counterclockwise direction at a specific height with respect to the structure 200. At this time, the cutting wire 300 is rotated while tension thereof is maintained, whereby the vertical height of the cutting wire may be uniformly maintained. Consequently, the cut recess members 115 provided at each surface of the cover 110 may have the same vertical height from the ground or may be different in vertical height from each other within a predetermined range.

In FIG. 1, each cut recess member 115 is shown as being provided at a specific vertical height; however, the horizontal cutting height of the cutting wire 300 may be changed in order to cut the structure 200. That is, in FIG. 1, which is a plan view, cut recess members 115 provided at a specific height of the structure 200 are illustrated. When the vertical height for horizontal cutting of the structure 200 is changed, however, the dust collection system shown in FIG. 1 is removed, and the cover, the cut recess members 115, and the passage members 120 are readjusted based on the changed vertical height.

When the air compressor 140 injects compressed air into the cut recess member 115, the compressed air must move along the passage member 120 and must be sprayed to the cutting wire 300 such that foreign matter (dust) attached to the outer circumferential surface of the cutting wire 300 and foreign matter, dust, etc. generated during cutting of the structure 200 can be immediately removed. Consequently, the vertical height of the cut recess member 115 and the vertical height of the cutting wire 300 must be equal to each other or must be different from each other within a predetermined range. If not, it is difficult to completely remove foreign matter attached to the outer circumferential surface of the cutting wire 300.

In addition, since the cutting wire 300 cuts the structure 200 while being rotated, high heat is generated from the cutting wire 300. When the air compressor 140 sprays compressed air through the passage member 120, it is also possible to remove heat of the cutting wire 300 generated during cutting, whereby it is possible to rapidly restore cutting force of the cutting wire 300, and therefore it is possible to improve cutting efficiency. In addition, since heat is removed during cutting, it is also possible to increase the lifespan of the cutting wire 300, and therefore it is possible to reduce expense of work.

As shown in FIG. 1, the cutting wire 300 cuts the structure 200 while being rotated in the counterclockwise direction. When compressed air is sprayed to the cutting wire 300, therefore, foreign matter attached to the cutting wire 300 falls downwards due to gravity while moving in the rotating direction of the cutting wire 300 due to air pressure caused by spray of compressed air and rotational force caused by rotation of the cutting wire 300. Since compressed air is sprayed when the cutting wire 300 performs cutting while being rotated, as described above, both foreign matter attached to the cutting wire 300 and foreign matter generated during cutting and attached to the structure fall downwards while moving in the rotating direction of the cutting wire 300.

In order to efficiently collect such foreign matter, it is necessary for the discharge portion 130 to be located in the vicinity of the end of the structure 200 that surrounds the structure 200 in the rotating direction of the cutting wire 300. Since the cover 110 configured to hermetically seal the second roller unit 420 is connected to the ground and thus performs the function of preventing foreign matter from being dispersed to the outside, the cover serves as a dust collector. Foreign matter may be introduced into the cover 110 configured to surround the second roller unit 420 by compressed air and rotation of the cutting wire 300, and the foreign matter may be discharged through the discharge portion 130. More specifically, in FIG. 1, the discharge portion 130 may be disposed under the cutting wire 300 and the second roller unit 420.

Since compressed air is sprayed to the cutting wire 300 rotating in the counterclockwise direction through the passage member 120 of each of the plurality of cut recess members 115, foreign matter is also moved in the counterclockwise direction by air pressure, falls downwards, and finally reaches the vicinity of the second roller unit 420. In the dust collection system according to the present invention, it is possible to automatically gather dust and foreign matter to the discharge portion 130 and to easily discharge the dust and the foreign matter. Consequently, it is possible to greatly reduce cost of manufacturing a dust collection facility and to reduce expenses of installation, operation, and disassembly of the dust collection facility.

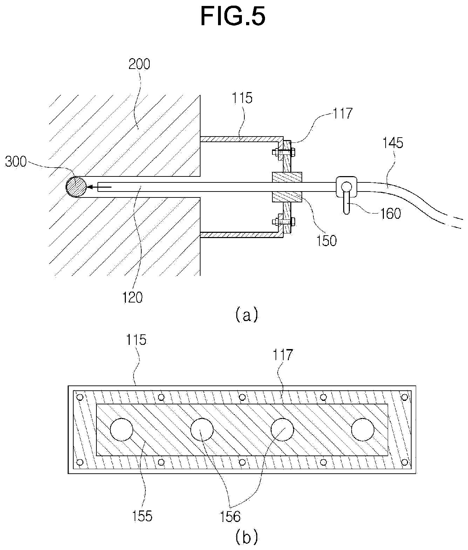

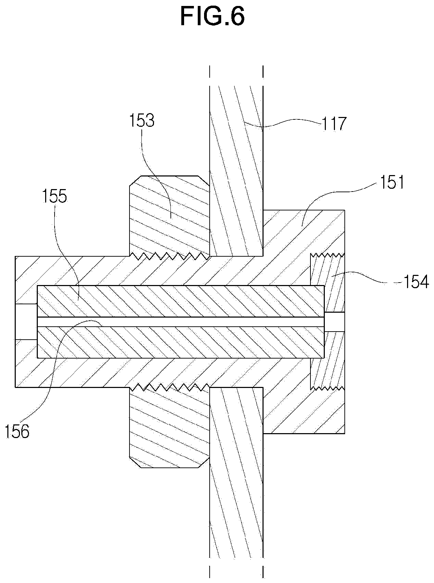

FIG. 5 is a view showing the inner structure of the cut recess member 115 in detail, wherein a longitudinal sectional view (a) of the cut recess member and a right side view (b) of the cut recess member 115 and the packing member 150 are shown. FIG. 6 is a view showing a coupling structure of the packing member 150 in detail.

As shown in FIG. 5(a), the cut recess member 115 is bent from the cover 110, which is made of a metal sheet, and may be integrally formed with the cover 110. The cut recess member 115 has an open side surface protruding in a stepped shape, and a transparent plate 117, which is made of a transparent material, such as an acrylic resin, may be coupled to the open side surface by fastening using bolts and nuts. A central part of the transparent plate 117 is open such that the packing member 150 can be mounted to the transparent plate by insertion. The passage member 120 is inserted through the rubber hole 156 formed through the packing member 150, and the passage member 120 may move relative to the packing member while being sealed by the packing member 150. As the cutting wire 300 cuts the structure 200 while being rotated, therefore, the end of the passage member 120 may move close to the cutting wire 300, whereby it is possible to spray compressed air immediately in front of the cutting wire.

As shown in FIG. 5(b), each of the transparent plate 117 and a rubber packing 155 may be formed in a rectangular shape such that a plurality of rubber holes 156 is arranged. In the figure, an embodiment in which four rubber holes 156 are formed in one rubber packing 155 is shown; however, the number of rubber holes 156 is not limited thereto. That is, a lot of rubber holes, e.g. two or more rubber holes, may be formed in one rubber packing 155 depending on the size of the structure. In addition, a plurality of transparent plates 117 may be consecutively coupled to one cut recess member 115.

As shown in FIG. 6, the entirety of the packing member 150 is not made of rubber, and the rubber packing 155 may be mounted in a plastic coupling member by insertion. That is, the packing member 150 may include a pipe bolt member 151, a nut member 153, a lid member 154, and a rubber packing 155.

The pipe bolt member 151 is formed in a boltshaped external shape. A space, into which the rubber packing 155 is inserted, may be formed in a central part of the pipe bolt member, and opposite ends of the pipe bolt member in a longitudinal direction may be open. A screw thread for fastening with the nut member 153 may be formed at an outer circumferential surface of the pipe bolt member 151.

A screw thread may be formed at an inner circumferential surface of the nut member 153 such that the nut member can be fastened to the pipe bolt member 151. The pipe bolt member 151 may be inserted through a through-hole of the transparent plate 117, and the nut member 153 is fastened to the pipe bolt member inside the transparent plate 117, whereby the pipe bolt member may be fixed. A rubber washer may be interposed between an inner surface of the transparent plate 117 and the nut member 153, whereby it is possible to hermetically isolate the inside of the cut recess member 115 from the outside.

The lid member 154 may be provided in the center thereof with a through-hole, through which the passage member 120 extends, and a screw thread may be formed at an outer circumferential surface of the lid member. The screw thread may be fastened to a recess formed in a head of the pipe bolt member 151, whereby the lid member may be fixed to the pipe bolt member. To this end, a screw thread may also be formed at an inner circumferential surface of the recess in the head of the pipe bolt member 151. A plastic lid member 154 may be separately formed, or the lid member 154 may be integrally formed with the rubber packing 155.

In the coupling structure of the packing member 150, the packing member 150 is securely mounted to the transparent plate 117. Even though the passage member 120 forcibly fitted in the rubber hole 156 slides, therefore, the packing member 150 may be securely fixed while the sealing performance thereof is maintained.

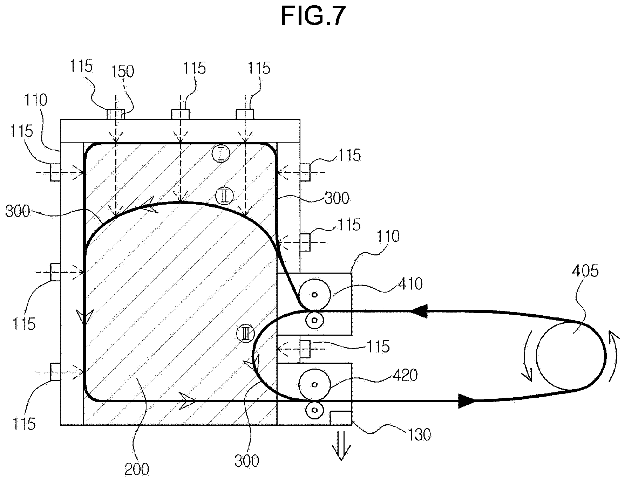

FIG. 7 is a front view illustrating a dust collection system for collecting foreign matter generated as the result of vertical cutting of a structure.

Referring to FIG. 7, the dust collection system according to the present invention may include a cover (or a sealing cover) 110, a passage member 120, a discharge portion 130, an air compressor 140 (not shown), and a packing member 150, in the same manner as shown in FIG. 1.

FIG. 7, which shows a dust collection system for collecting foreign matter generated from a cutting wire configured to cut a structure, such as concrete, is a front view illustrating the case in which a structure 200 is cut in a direction perpendicular to the ground, i.e. a vertical direction. That is, the structure 200, which is erected, is cut in the vertical direction.

As shown in FIG. 7, the cover 110 of the dust collection system also hermetically seals roller units 410 and 420 of a wire saw configured to drive the cutting wire 300. In the dust collection system, the reason that the cover 110 individually hermetically seals the first roller unit 410 and the second roller unit 420 is that it is necessary to prevent dust or foreign matter separated from the cutting wire as the result of compressed air being sprayed from being dispersed out of the structure 200. That is, dust or foreign matter is discharged only through the discharge portion 130.

In the wire saw machine (e.g. a diamond wire saw (DWS)), the cutting wire 300 may be introduced into the structure 200 through the first roller unit 410, and the cutting wire 300 may be sent to a main roller of the wire saw through the second roller unit 420, in the same manner as in horizontal cutting of FIG. 1. In FIG. 1, the first roller unit 410 and the second roller unit 420 are located at opposite sides of the structure 200 in the horizontal direction for horizontal cutting. In FIG. 7, however, the first roller unit 410 and the second roller unit 420 are provided in the vertical direction for vertical cutting. That is, the first roller unit 410 is located higher than the second roller unit 420 in the vertical direction. In the same manner, each of the first roller unit 410 and the second roller unit 420 of FIG. 7 is fixed to a wall of the structure 200 by an anchor bolt, etc.

The cover 110 hermetically seals the structure 200, which is a target to be cut, and a plurality of cut recess members 115 may be provided at an outer circumferential surface of the cover 110 or an outer surface of the cover 110. The cover 110 may be configured to hermetically seal the remaining part of the structure 200 excluding the plurality of cut recess members 115. In FIG. 7, the structure 200 is illustrated as being formed in a quadrangular shape as an example, and therefore the cover 110 may also be formed in a quadrangular shape so as to hermetically seal an outer surface of the structure 200. Although the material for the cover 110 is not limited, the cover may be made of a metal sheet or a material capable of allowing the structure 200 in the cover 110 to be visible therethrough. For example, a transparent acrylic cover may be used.

The reason that the plurality of cut recess members 115 is provided at the outer surface of the cover 110 is that it is necessary to inject compressed air through the cut recess members 115. The air compressor 140 provides compressed air into the plurality of cut recess members 115. The air compressor 140 may be provided for each of the cut recess members 115.

The passage member 120 is provided in each of the plurality of cut recess members 115 in a direction toward the cutting wire 300 such that compressed air provided by the compressor 140 is sprayed to the cutting wire 300 through the cover 110. A metal pipe may be used as an example of the passage member 120. The passage member 120 may be implemented in any of various shapes, such as a circular shape.

When the structure 200 is initially cut, the cutting wire 300 surrounds the structure 200 along a line indicated by "I" in FIG. 7. When the cutting wire 300 vertically cuts the structure 200 while the cutting wire is rotated in a predetermined direction as the result of the wire saw machine (DWS) being driven (as an example, vertical cutting in the counterclockwise direction in FIG. 7), upper quadrangular corners of the structure 200 are cut first. As the structure 200 is cut by rotation of the cutting wire 300, the cutting wire 330 moves inwardly of the structure 200 and surrounds the structure 200 along a curved line indicated by "II". As the structure 200 is further cut, the cutting wire 330 moves more inwardly of the structure 200 and surrounds the structure 200 along a line indicated by "III". As the structure 200 is cut, as described above, the shape of the cutting wire 300 varies from line I to line II and from line II to line III.

As the structure 200 is cut, as described above, the distance (straight distance) between the cut recess member 115 and the cutting wire 300 increases, particularly from opposite corners of the structure 200. If the length of the passage member 120 is fixed even though the distance between the cut recess member 115 and the cutting wire 300 increases, foreign matter attached to the cutting wire 300 may not be easily removed when compressed air is sprayed to the cutting wire 300 through the passage member 120. To this end, the passage member 120 is configured such that the length of the passage member 120 can extend in a direction toward the cutting wire 300 via the cover 110 (or the thickness of the cover 110) and such that the length of the passage member can be adjusted. The passage member 120 located in the vicinity of each of the opposite corners of the structure 200 is configured to further extend in the direction toward the cutting wire 300 as the structure 200 is cut.

The rubber packing member 150 is configured to wrap at least a part of an inner circumferential surface (an inner surface) of each of the plurality of cut recess members 115. The packing member 150 is configured to wrap at least a part of an inner circumferential surface of the passage member 120 such that frictional force is applied between the packing member and the passage member 120, whereby it is possible to fix the passage member 120 even when compressed air is injected into the passage member 120. When the cutting wire 300 cuts the structure 200 while being rotated, pressure or vibration may be applied to the cut recess member 115. In this case, when the packing member 150 is made of rubber, the packing member may absorb external force, pressure or vibration, applied to the cut recess member 115, whereby it is possible to more robustly support the passage member 120.

As shown in FIG. 7, the cut recess members 115 may be provided along the outer circumferential surface of the cover 110 at predetermined intervals. Since the shape of the structure 200 is quadrangular, it is also necessary for the cover 110 to have four surfaces in order to hermetically seal the structure 200. As shown in FIG. 7, a plurality of cut recess members 115 may be provided for each surface as an example, and the cut recess members 115 may be spaced apart from each other by a predetermined distance.

When the air compressor 140 injects compressed air into the cut recess member 115, the compressed air may move along the passage member 120 and may be sprayed to the cutting wire 300, whereby foreign matter may be completely removed.

In addition, since the cutting wire 300 cuts the structure 200 while being rotated, high heat is generated from the cutting wire 300. When the air compressor 140 sprays compressed air through the passage member 120, it is also possible to remove heat of the cutting wire 300 generated during cutting, whereby it is possible to rapidly restore cutting force of the cutting wire 300, and therefore it is possible to improve cutting efficiency. In addition, since heat is removed during cutting, it is also possible to increase the lifespan of the cutting wire 300, and therefore it is possible to reduce expense of work.

As shown in FIG. 7, the cutting wire 300 vertically cuts the structure 200 while being rotated in the counterclockwise direction. When compressed air is sprayed to the cutting wire 300, therefore, foreign matter attached to the cutting wire 300 falls downwards due to gravity while moving in the rotating direction of the cutting wire 300 due to air pressure caused by spray of compressed air and rotational force caused by rotation of the cutting wire 300. Since compressed air is sprayed when the cutting wire 300 performs cutting while being rotated, as described above, both foreign matter attached to the cutting wire 300 and foreign matter generated during cutting and attached to the structure fall downwards while moving in the rotating direction of the cutting wire 300.

In order to efficiently collect such foreign matter, it is necessary for the discharge portion 130 to be located in the vicinity of the end of the structure 200 that surrounds the structure 200 in the rotating direction of the cutting wire 300. Since the cover 110 configured to hermetically seal the second roller unit 420 is connected to the ground and thus performs the function of preventing foreign matter from being dispersed to the outside, the cover serves as a dust collector. Foreign matter may be introduced into the cover 110 configured to surround the second roller unit 420 by compressed air and rotation of the cutting wire 300, and the foreign matter may be discharged through the discharge portion 130. More specifically, as FIG. 1, the discharge portion 130 may be disposed under the cutting wire 300 and the second roller unit 420.

Since compressed air is sprayed to the cutting wire 300 even in vertical cutting shown in FIG. 7, foreign matter is moved downwards by air pressure, is further moved in the counterclockwise direction, and falls to the ground. Since the compressed air is sprayed to the cutting wire 300 in a direction toward the second roller unit 420 before the foreign matter falls to the ground, the foreign matter finally reaches the vicinity of the second roller unit 420. In the dust collection system according to the present invention, it is possible to automatically gather dust and foreign matter to the discharge portion 130 and to easily discharge the dust and the foreign matter. Consequently, it is possible to greatly reduce cost of manufacturing a dust collection facility and to reduce expenses of installation, operation, and disassembly of the dust collection facility.

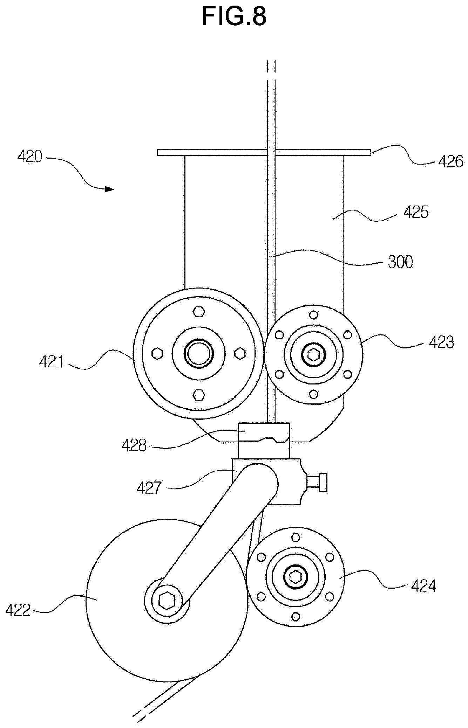

FIG. 8 is a view showing the roller units of the wire saw related to the dust collection system according to the present invention in detail.

The first roller unit 410 and the second roller unit 420 are identical in construction to each other except for position. Hereinafter, therefore, the construction of the second roller unit 420 will be described. The second roller unit 420 may include a fixing roller 421, a guide roller 422, a first auxiliary roller 423, a second auxiliary roller 424, a support portion 425, a fixing portion 426, a non-rotary frame 427, and a rotary frame 428.

The fixing roller 421, which is a roller fixed to the support portion 425 so as to be supported thereby, assists in stably moving the cutting wire 300 such that the cutting wire surrounds the structure 200. The guide roller 422 guides the cutting wire 300 introduced from the main roller of the wire saw toward the fixing roller 421, thereby assisting in the fixing roller 421 moving the cutting wire 300.

The first auxiliary roller 423, which is a roller configured to assist in the fixing roller 421, is configured such that at least a part of the first auxiliary roller is connected to an outer circumferential surface of the fixing roller 421 in order to prevent separation of the cutting wire 300 moving along the outer circumferential surface of the fixing roller 421 from the fixing roller. In the same manner, the second auxiliary roller 424 is also configured such that at least a part of the second auxiliary roller is connected to an outer circumferential surface of the guide roller 422 in order to prevent separation of the cutting wire 300 moving along the outer circumferential surface of the guide roller 422 from the guide roller.

The support portion 425 is a member configured to support the fixing roller 421 and the first auxiliary roller 423. The fixing portion 426, which is coupled to the support portion 425, is a member configured to be fixed to a wall, etc. of the structure 200. As shown in FIG. 8, anchor bolts may be coupled to a plurality of holes provided in the fixing portion 426, whereby the fixing portion may be coupled to the wall of the structure 200.

The non-rotary frame 427 is a cylindrical frame having a hole, through which the cutting wire 300 passes, formed therethrough, and is not rotatable. The rotary frame 428 is a cylindrical rotatable frame inserted into the non-rotary frame 427. The angle between the guide roller 422 and the fixing roller 421 may be changed using the rotary frame 428, as needed.

As described above, each of the first auxiliary roller 423 and the second auxiliary roller 424 prevents the cutting wire 300 from being separated from the outer circumferential surface of a corresponding one of the fixing roller 421 and the guide roller 422 during cutting. Since force is applied to the cutting wire 300 during cutting, the cutting wire 300 is too frequently separated from the outer circumferential surfaces of the first auxiliary roller 423 and the second auxiliary roller 424. In general, cutting wire 300 may be easily separated during cutting using the wire saw machine if there are no the first auxiliary roller 423 and the second auxiliary roller 424.

The separated cutting wire 300 must be disposed on the outer circumferential surface of each of the fixing roller 421 and the guide roller 422 again; however, this remarkably reduces cutting efficiency. Since, when the cutting wire 300 is separated while cutting work is performed, the cutting work must be stopped, the cover must be removed, and setting must be performed again, increase in time and expense and decrease in productivity are incurred. In particular, when the cutting wire 300 is separated from the outer circumferential surfaces of the rollers 421 and 422 at the height of a tall structure higher than the ground, much time and effort are required to restore the cutting wire.

In the roller system proposed by the present invention, however, the second roller unit 420 is provided with the first auxiliary roller 423 and the second auxiliary roller 424, whereby it is possible to prevent separation of the cutting wire 300, and therefore it is possible to considerably improve cutting efficiency.

The embodiments described above are predetermined combinations of elements and features of the present invention. Each element or feature must be considered to be optional unless explicitly mentioned otherwise. Each element or feature may be implemented in a state of not being combined with another element or feature. In addition, some elements and/or features may be combined to constitute an embodiment of the present invention. The sequence of operations described in the embodiments of the present invention may be changed. Some elements or features in a certain embodiment may be included in another embodiment, or may be replaced with corresponding elements or features in another embodiment. It is obvious that claims having no explicit citation relationship may be combined to constitute an embodiment or may be included as a new claim by amendment after application.

Those skilled in the art will appreciate that the present invention may be embodied in other specific forms than those set forth herein without departing from essential characteristics of the present invention. The above description is therefore to be construed in all aspects as illustrative and not restrictive. The scope of the invention should be determined by reasonable interpretation of the appended claims and all changes coming within the equivalency range of the invention are intended to be within the scope of the invention.

### [Description of Reference Numerals]

Cover (110)
Cut recess member (115)
Transparent plate (117)
Passage member (120)
Discharge portion (130)
Air compressor (140)
Air hose (145)
Rubber packing member (150)
Pipe bolt member (151)
Nut member (153)
Lid member (154)
Rubber packing (155)
Rubber hole (156)
Packing member (158) for dust collection and cover recess protection
Valve (160)
Structure (200)
Cutting wire (300)
Main roller (405)
First roller unit (410)
Second roller unit (420)
Fixing roller (421)
Guide roller (422)
First auxiliary roller (423)
Second auxiliary roller (424)
Support portion (425)
Fixing portion (426)
Non-rotary frame (427)
Rotary frame (428)

## Claims

1. A dust collection system for collecting foreign matter generated during cutting of a nuclear power plant structure and foreign matter attached to a cutting wire in a dry state, the dust collection system comprising:
a cover configured to hermetically seal the nuclear power plant structure, which is a target to be cut, the cover being provided at an outer circumferential surface thereof with a plurality of cut recess members adjusted for a height of the cutting wire, the cover being made of a transparent material;
an air compressor configured to supply compressed air;
an air hose configured to convey the compressed air;
a passage member provided in each of the plurality of cut recess members, the passage member being configured to receive the compressed air such that the compressed air is sprayed to the cutting wire through the cover made of the transparent material;
a packing member configured to wrap at least a part of an inner circumferential surface of each of the plurality of cut recess members while wrapping at least a part of an outer circumferential surface of the passage member such that frictional force is formed between the passage member and the packing member; and
a discharge portion provided in a vicinity of an end of the nuclear power plant structure that surrounds the nuclear power plant structure in a rotating direction of the cutting wire, the discharge portion being configured to discharge the foreign matter.

2. The dust collection system according to claim 1, wherein the passage member is configured such that a length of the passage member is adjustable so as to extend through the cover.

3. The dust collection system according to claim 2, wherein the passage member comprises a pipe.

4. The dust collection system according to claim 1, wherein the cover made of the transparent material comprises a transparent acrylic cover.

5. The dust collection system according to claim 1, wherein
the plurality of cut recess members is provided along the outer circumferential surface of the cover at predetermined intervals in a direction parallel to a ground, and
a vertical height of each of the plurality of cut recess members is equal to a vertical height of the cutting wire or is different from the vertical height of the cutting wire within a predetermined range.

6. The dust collection system according to claim 1, wherein the packing member comprises a packing member made of rubber.

7. A wire saw apparatus for cutting a structure using a dry method, the wire saw apparatus comprising:
a main roller;
a first roller unit located at one side of the structure, the first roller being configured to allow a cutting wire introduced from the main roller to pass therethrough such that the cutting wire is directed to the structure so as to surround the structure; and
a second roller unit located at the other side of the structure, the second roller being configured to allow the cutting wire moving while surrounding the structure to pass therethrough such that the cutting wire is transferred to the main roller, wherein
the first roller unit comprises a first fixing roller, a first auxiliary roller configured such that at least a part of the first auxiliary roller is in contact with an outer circumferential surface of the first fixing roller, a first guide roller configured to guide the cutting wire introduced from the main roller to the first fixing roller, and a second auxiliary roller configured such that at least a part of the second auxiliary roller is in contact with an outer circumferential surface of the first guide roller, and
the second roller unit comprises a second fixing roller configured to allow the cutting wire moving while surrounding the structure to pass therethrough, a third auxiliary roller configured such that at least a part of the third auxiliary roller is in contact with an outer circumferential surface of the second fixing roller, a second guide roller configured to guide the cutting wire introduced from the second fixing roller to the main roller, and a fourth auxiliary roller configured such that at least a part of the fourth auxiliary roller is in contact with an outer circumferential surface of the second guide roller.

8. The wire saw apparatus according to claim 7, wherein the first roller unit comprises:
a first support portion configured to support the first fixing roller and the first auxiliary roller;
a first fixing portion coupled to the support portion, the first fixing portion being configured to fix the first roller unit to the structure;
a first non-rotary frame located between the first fixing roller and the first guide roller, the first non-rotary frame having a hole, through which the cutting wire passes, formed therethrough, the first non-rotary frame being formed in a cylindrical shape, the first non-rotary frame being non-rotatable; and
a first rotary frame inserted into the non-rotary frame, the first rotary frame being formed in a cylindrical shape, the first rotary frame being rotatable.

9. The wire saw apparatus according to claim 7, wherein the second roller unit comprises:
a second support portion configured to support the second fixing roller and the third auxiliary roller;
a second fixing portion coupled to the support portion, the second fixing portion being configured to fix the second roller unit to the structure;
a second non-rotary frame located between the second fixing roller and the second guide roller, the second non-rotary frame having a hole, through which the cutting wire passes, formed therethrough, the second non-rotary frame being formed in a cylindrical shape, the second non-rotary frame being non-rotatable; and
a second rotary frame inserted into the non-rotary frame, the second rotary frame being formed in a cylindrical shape, the second rotary frame being rotatable.

10. The wire saw apparatus according to claim 8, wherein the first rotary frame is configured to adjust an angle between the first fixing roller and the first guide roller.

11. The wire saw apparatus according to claim 9, wherein the second rotary frame is configured to adjust an angle between the second fixing roller and the second guide roller.

12. The wire saw apparatus according to claim 7, further comprising:
a cover connected to a ground at one side of the structure, the cover being configured to hermetically seal the first roller unit, the cover being made of a transparent material; and
a cover connected to the ground at the other side of the structure, the cover being configured to hermetically seal the second roller unit, the cover being made of a transparent material.

13. The wire saw apparatus according to claim 7, wherein the first roller unit and the second roller unit are configured to allow the cutting wire to pass therethrough while cutting the structure in a direction parallel to the ground.

14. The wire saw apparatus according to claim 7, wherein the structure comprises a nuclear power plant structure.

15. A wire saw apparatus for cutting a structure using a dry method, the wire saw apparatus comprising:
a main roller;
a first roller unit located at one side of the structure, the first roller being configured to allow a cutting wire introduced from the main roller to pass therethrough such that the cutting wire is directed to the structure so as to surround the structure; and
a second roller unit located at the one side of the structure together with the first roller unit so as to be installed at a different height from the first roller unit, the second roller being configured to allow the cutting wire moving while surrounding the structure to pass therethrough such that the cutting wire is transferred to the main roller, wherein
the first roller unit comprises a first fixing roller, a first auxiliary roller configured such that at least a part of the first auxiliary roller is in contact with an outer circumferential surface of the first fixing roller, a first guide roller configured to guide the cutting wire introduced from the main roller to the first fixing roller, and a second auxiliary roller configured such that at least a part of the second auxiliary roller is in contact with an outer circumferential surface of the first guide roller, and
the second roller unit comprises a second fixing roller configured to allow the cutting wire moving while surrounding the structure to pass therethrough, a third auxiliary roller configured such that at least a part of the third auxiliary roller is in contact with an outer circumferential surface of the second fixing roller, a second guide roller configured to guide the cutting wire introduced from the second fixing roller to the main roller, and a fourth auxiliary roller configured such that at least a part of the fourth auxiliary roller is in contact with an outer circumferential surface of the second guide roller.

16. The wire saw apparatus according to claim 15, wherein the first roller unit comprises:
a first support portion configured to support the first fixing roller and the first auxiliary roller;
a first fixing portion coupled to the support portion, the first fixing portion being configured to fix the first roller unit to the structure;
a first non-rotary frame located between the first fixing roller and the first guide roller, the first non-rotary frame having a hole, through which the cutting wire passes, formed therethrough, the first non-rotary frame being formed in a cylindrical shape, the first non-rotary frame being non-rotatable; and
a first rotary frame inserted into the non-rotary frame, the first rotary frame being formed in a cylindrical shape, the first rotary frame being rotatable.

17. The wire saw apparatus according to claim 15, wherein the second roller unit comprises:
a second support portion configured to support the second fixing roller and the third auxiliary roller;
a second fixing portion coupled to the support portion, the second fixing portion being configured to fix the second roller unit to the structure;
a second non-rotary frame located between the second fixing roller and the second guide roller, the second non-rotary frame having a hole, through which the cutting wire passes, formed therethrough, the second non-rotary frame being formed in a cylindrical shape, the second non-rotary frame being non-rotatable; and
a second rotary frame inserted into the non-rotary frame, the second rotary frame being formed in a cylindrical shape, the second rotary frame being rotatable.
